# EUROPEAN PATENT APPLICATION

(11) **EP 4 797 657 A1**
(43) Date of publication of application: **26.08.2026**
(21) Application number: 25869627.7
(22) Date of filing: 06.11.2025
(51) Int. Cl.: H04L 67/06

(54) **INTELLIGENT FILE UPLOADING METHOD, DEVICE AND SYSTEM**

(30) Priority: 30.12.2024 CN 202411992427
(71) Applicant: Ugreen Group Limited, Shenzhen, Guangdong 518110 (CN)
(72) Inventor: ZHONG, Weiwen, Shenzhen, Guangdong 518110 (CN)
(74) Representative: Petraz, Gilberto Luigi
(86) International application number: PCT/CN2025/132951
(87) International publication number: WO 2026/144537

(57) **Abstract**

The present application discloses an intelligent file uploading method, device, and system. The method is applied in a file uploading device, the file uploading device includes a first information processing port and a second information processing port, and includes: the first information processing port determining file descriptor information and target device address information of a file to be uploaded; the second information processing port determining a file content mapping result according to the file descriptor information, performing a block reading and writing operation on the file content mapping result to a data cache area, and performing a data reading and uploading operation on block data in the data cache area according to the target device address information, to obtain a file upload result.

## Description

### TECHNICAL FIELD

The present application relates to the technical field of network file transmission, and in particular, to an intelligent file uploading method, device, and system.

### BACKGROUND

In modern information society, file data has become an indispensable and important asset for various organizations and individuals. The entire economy and society rely on data and information, making the uploading and transmission of file data particularly frequent and important.

Currently, common file uploading methods mostly involve reading the entire file into memory at once during the upload process. Especially when uploading large files, memory overflow is prone to occur. Furthermore, current file uploading systems control file reading and writing speeds. When the network status is in a certain target network speed transmission environment, the system restricts virtual machine memory usage and reduces CPU frequency, leading to limited network transmission speed, low file upload efficiency, and poor upload stability. Therefore, providing a method capable of improving file upload efficiency and upload stability is particularly important.

### SUMMARY

The present application provides an intelligent file uploading method, device, and system, which may improve file upload efficiency and upload stability, thereby improving the accuracy and reliability of uploaded files.

To solve the above technical problems, a first aspect of the present disclosure provides an intelligent file uploading method. The method is applied in a file uploading device, the file uploading device is in communication connection with a network attached storage device, and the file uploading device includes a first information processing port and a second information processing port. The method includes:
determining, by the first information processing port, file upload requirement information of a file to be uploaded, and sending the file upload requirement information to the second information processing port, the file upload requirement information at least including file descriptor information of the file to be uploaded and target device address information, wherein the target device includes the network attached storage device;
performing, by the second information processing port, a corresponding file mapping operation on the file to be uploaded according to the file descriptor information, to obtain a file content mapping result of the file to be uploaded;
performing, by the second information processing port, a corresponding block reading and writing operation on the file content mapping result to a preset data cache area, and performing, according to the target device address information, a corresponding data reading and uploading operation on block data in the data cache area, to obtain a file upload result of the file to be uploaded, and sending the file upload result to the first information processing port, the file upload result including real-time upload progress information and/or file upload completion status of the file to be uploaded.

A second aspect of the present disclosure discloses another intelligent file uploading device. The file uploading device is in communication connection with the network attached storage device. The file uploading device includes a first information processing port and a second information processing port. Both the first information processing port and the second information processing port include:
a memory, memorized with an executable code; and
a processor, coupled with the memory,
the processor is configured to invoke the executable code stored in the memory to execute the intelligent file uploading method disclosed in the first aspect of the present application.

Compared with the prior art, embodiments of the present application have the following beneficial effects:
The present application implements intelligent file upload functionality through multiple steps, such as performing corresponding file upload requirement information determination operations, file mapping operations, data reading and uploading operations, and information interaction operations by the first information processing port and the second information processing port. This is beneficial for improving the comprehensiveness and integrity of an intelligent file uploading method, and is also beneficial for improving the reasonableness and feasibility of an intelligent file uploading method. Furthermore, performing corresponding block reading and writing operations on the file content mapping result, and performing corresponding data reading and uploading operations on the block data in the data cache area, reading, writing, and uploading in blocks, avoids loading a large file entirely into memory at once. This is beneficial for improving the efficiency, stability, and accuracy of file transfer and upload, thereby contributing to improving the accuracy and reliability of uploaded files, reducing memory consumption and occupancy, and providing flexibility and platform compatibility for file uploads.

### BRIEF DESCRIPTION OF THE DRAWINGS

FIG. 1 is a schematic flowchart of an intelligent file uploading method disclosed in an embodiment of the present application;
FIG. 2 is a schematic flowchart of another intelligent file uploading method disclosed in an embodiment of the present application;
FIG. 3 is a schematic structural diagram of a first information processing port disclosed in an embodiment of the present application;
FIG. 4 is a schematic structural diagram of a second information processing port disclosed in an embodiment of the present application;
FIG. 5 is a schematic structural diagram of an intelligent file uploading system disclosed in an embodiment of the present application;
FIG. 6 is a schematic diagram of a system architecture of an intelligent file uploading method disclosed in an embodiment of the present application;
FIG. 7 is a schematic timing diagram of file uploading in an intelligent file uploading method disclosed in an embodiment of the present application;
FIG. 8a is a schematic diagram of MMAP (Memory map) disclosed in an embodiment of the present application;
FIG. 8b is a schematic diagram of a ring buffer disclosed in an embodiment of the present application;
FIG. 9 is a schematic diagram of a system architecture of another intelligent file uploading method disclosed in an embodiment of the present application.

### DETAILED DESCRIPTION

The present application discloses an intelligent file uploading method, device, and system. The intelligent file upload function may be implemented through multiple steps, such as performing corresponding file upload requirement information determination operations, file mapping operations, data reading and uploading operations, and information interaction operations by the first information processing port and the second information processing port. This is beneficial for improving the comprehensiveness and integrity of an intelligent file uploading method, and is also beneficial for improving the reasonableness and feasibility of an intelligent file uploading method. Furthermore, performing corresponding block reading and writing operations on the file content mapping result, and performing corresponding data reading and uploading operations on the block data in the data cache area, reading, writing, and uploading in blocks, avoids loading a large file entirely into memory at once. This is beneficial for improving the efficiency, stability, and accuracy of file transfer and upload, thereby contributing to improving the accuracy and reliability of uploaded files, reducing memory consumption and occupancy, and providing flexibility and platform compatibility for file uploads. The following provides a detailed description respectively.

### Embodiment 1

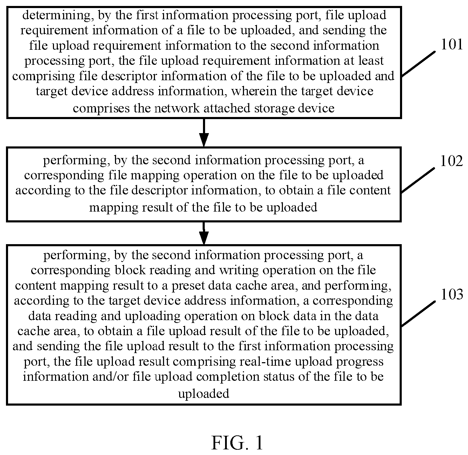

Please refer to FIG. 1. FIG. 1 is a schematic flowchart of an intelligent file uploading method disclosed in an embodiment of the present application. The method described in FIG. 1 may be applied in a file uploading device. The file uploading device is in communication connection with a network attached storage device, and the file uploading device includes a first information processing port and a second information processing port, which is not limited in this embodiment of the present application. As shown in FIG. 1, the intelligent file uploading method includes the following operations:
101. determining, by the first information processing port, file upload requirement information of a file to be uploaded, and sending the file upload requirement information to the second information processing port, the file upload requirement information at least including file descriptor information of the file to be uploaded and target device address information, wherein the target device includes the network attached storage device.

Optionally, the intelligent file uploading method described in this embodiment of the present application may be applied in an Android system, or may be applied in other systems requiring file upload, which is not limited in this embodiment of the present application.

Optionally, the first information processing port may be a Java layer, or may be other device or apparatus capable of implementing similar information processing functions, which is not limited in this embodiment of the present application.

Optionally, the second information processing port may be a native code module, or may be other device or apparatus capable of implementing similar information processing functions, which is not limited in this embodiment of the present application.

Optionally, the file descriptor information may correspond to an FID; the target device address information may correspond to a URL; furthermore, managing file descriptors (FIDs) at the Java or Kotlin layer to obtain files provides stronger versatility, and using FIDs to operate files reduces privacy policy risks, making it suitable for various mobile application scenarios requiring large file uploads, which is not limited in this embodiment of the present application.

Optionally, the first information processing port and the second information processing port may perform information interaction through a JNI interface, which is not limited in this embodiment of the present application.

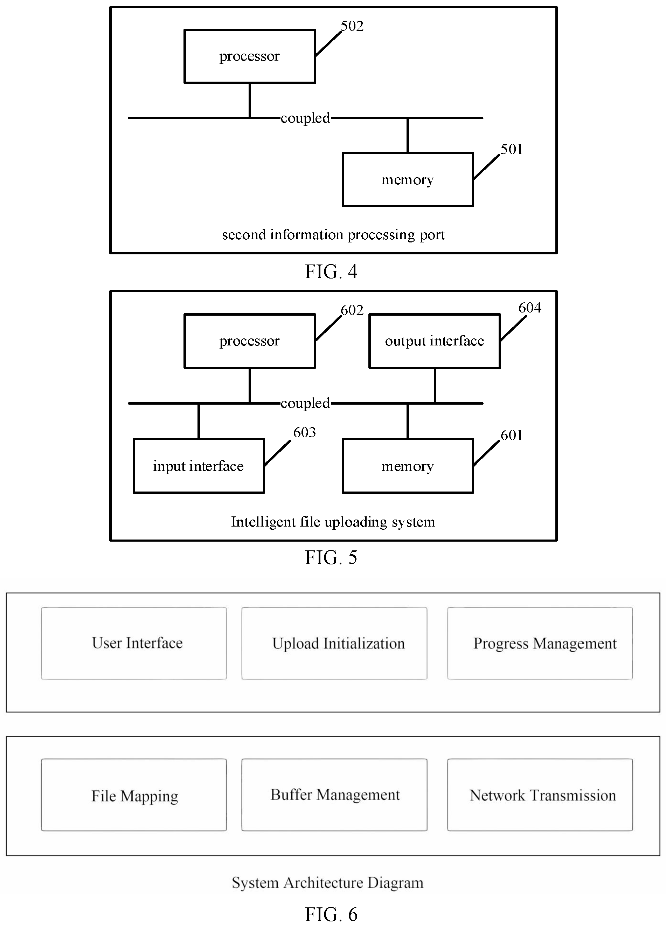

Optionally, when the first information processing port is the Java layer and the second information processing port is the native code module, a schematic diagram of the system architecture of the intelligent file uploading method may be referred to in FIG. 6 in the accompanying drawings, which is not limited in this embodiment of the present application.

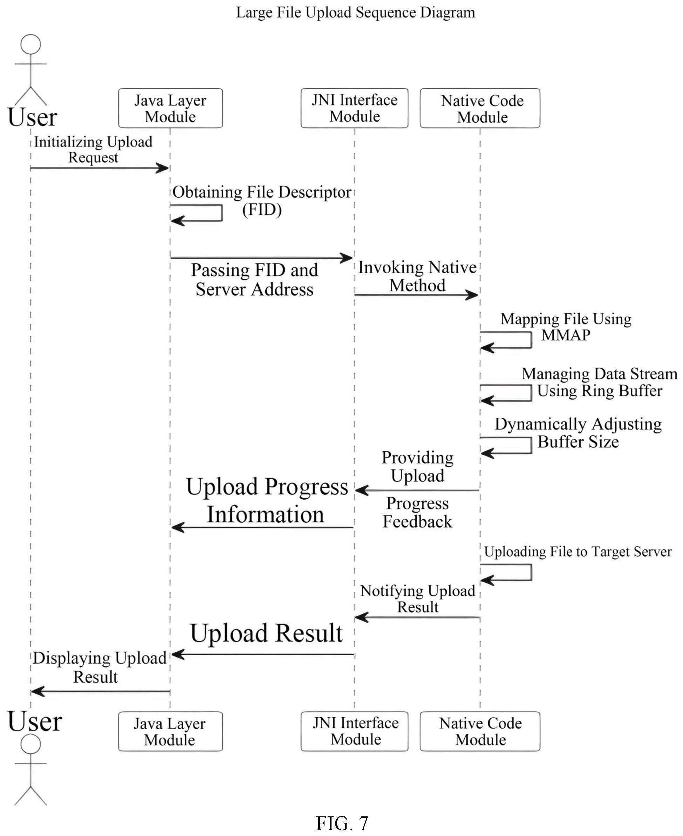

Optionally, a schematic timing diagram of file uploading for the intelligent file uploading method may be referred to in FIG. 7 in the accompanying drawings, which is not limited in this embodiment of the present application.

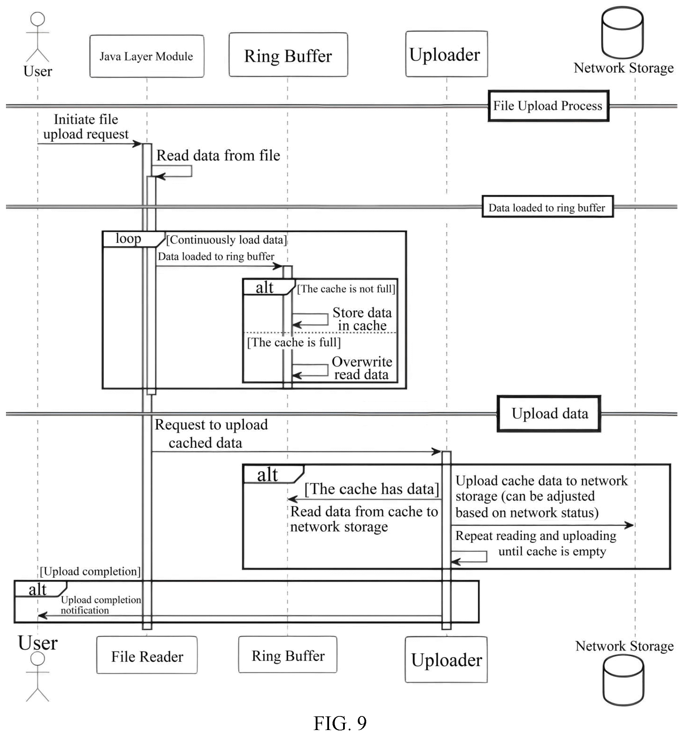

Optionally, a schematic diagram of the system architecture of another intelligent file uploading method may be referred to in FIG. 9 in the accompanying drawings, which is not limited in this embodiment of the present application.

102. performing, by the second information processing port, a corresponding file mapping operation on the file to be uploaded according to the file descriptor information, to obtain a file content mapping result of the file to be uploaded.

Further optionally, the second information processing port performs a corresponding file mapping operation on the file to be uploaded according to the file descriptor information to obtain a file content mapping result of the file to be uploaded. For example, by combining MMAP technology, the file passed through the file descriptor information is directly mapped to the address space of a process to obtain the file content mapping result, that is, using MMAP to map the file passed through the FID into the memory space to obtain the file content mapping result, thereby allowing access to the file content as if accessing memory, without the need for explicit file I/O operations, improving file reading efficiency, which is not limited in this embodiment of the present application.

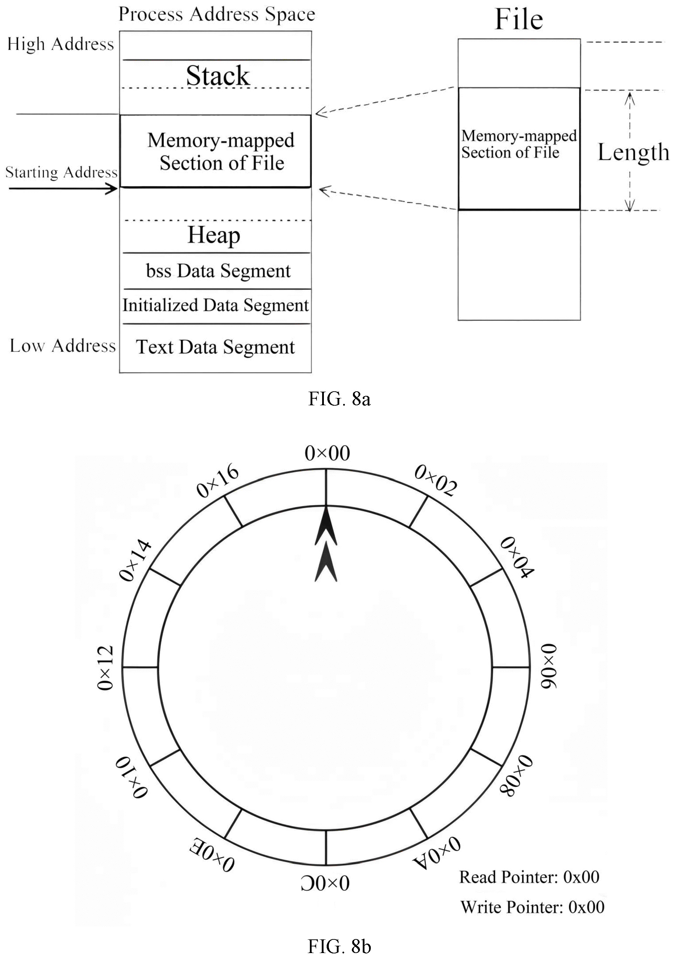

Optionally, an example diagram of MMAP may be referred to in FIG. 8a in the accompanying drawings, which is not limited in this embodiment of the present application.

103. performing, by the second information processing port, a corresponding block reading and writing operation on the file content mapping result to a preset data cache area, and performing, according to the target device address information, a corresponding data reading and uploading operation on block data in the data cache area, to obtain a file upload result of the file to be uploaded, and sending the file upload result to the first information processing port, the file upload result including real-time upload progress information and/or file upload completion status of the file to be uploaded.

Further optionally, the method may also include the following operation:
After the upload of the file to be uploaded is completed, the second information processing port releases related resources (such as memory resources), which is not limited in this embodiment of the present application.

Optionally, this solution may customize the upload scheme according to the characteristics of different platforms, providing a more efficient and controllable upload solution, which is not limited in this embodiment of the present application.

It may be seen that implementing the intelligent file uploading method described in this embodiment of the present application may realize intelligent file upload functionality through multiple steps, such as performing corresponding file upload requirement information determination operations, file mapping operations, data reading and uploading operations, and information interaction operations by the first information processing port and the second information processing port. This is beneficial for improving the comprehensiveness and integrity of an intelligent file uploading method, and is also beneficial for improving the reasonableness and feasibility of an intelligent file uploading method. Furthermore, performing corresponding block reading and writing operations on the file content mapping result, and performing corresponding data reading and uploading operations on the block data in the data cache area, reading, writing, and uploading in blocks, avoids loading a large file entirely into memory at once. This is beneficial for improving the efficiency, stability, and accuracy of file transfer and upload, thereby contributing to improving the accuracy and reliability of uploaded files, reducing memory consumption and occupancy, and providing flexibility and platform compatibility for file uploads.

In an optional embodiment, the operation of the second information processing port performing the corresponding block reading and writing operation on the file content mapping result to the preset data cache area, and performing the corresponding data reading and uploading operation on the block data in the data cache area according to the target device address information, to obtain the file upload result of the file to be uploaded, may include:
performing, the second information processing port, a corresponding data block reading operation on the file content mapping result according to a preset file size block unit, to obtain at least one first block data, and writing each of the first block data to the preset data cache area, to obtain at least one second block data;
performing a corresponding content reading and file uploading operation on each of the second block data in the data cache area according to the target device address information and determined upload sequencing information corresponding to all the second block data;
determining, during performing the content reading and file uploading operation, real-time upload progress information of the file to be uploaded according to the content reading and file uploading operation;
determining, after the content reading and file uploading operation is completed, a file upload completion status of the file to be uploaded according to the content reading and file uploading operation, the file upload completion status being configured to represent file upload success related information and/or file upload failure related information.

Optionally, a ring buffer (a method of managing data using a ring buffer algorithm) is used to operate the file data stream, a fixed-size buffer area is set, and 64kb is the block size of the buffer area; reading and writing proceed block by block (i.e., reading and writing are performed one block at a time), and the reading and writing order is determined by the movement of read/write pointers and the size of the buffer area; a write pointer is configured to write data to the buffer area, and a read pointer is configured to read data from the buffer area. The two ensure correct data reading and writing and avoid conflicts or data overwrite errors through conditional judgment; data reading and writing in the buffer area are performed simultaneously; the read data is uploaded in sequence, which is not limited in this embodiment of the present application.

Optionally, the upload sequencing information may be determined through the reading and writing sequence, or may be determined through other information parameters, which is not limited in this embodiment of the present application.

Optionally, the performing the corresponding content reading and file uploading operation on each of the second block data in the data cache area according to the target device address information and the determined upload sequencing information corresponding to all the second block data is exemplified as follows: each of the second block data in the data cache area is read in sequence based on the upload sequencing information and uploaded to a target server corresponding to the target device address information, which is not limited in this embodiment of the present application.

Optionally, the data cache area may be a ring buffer, or may be other types of buffer areas; further, the ring buffer may be referred to in FIG. 8b in the accompanying drawings, which is not limited in this embodiment of the present application.

Optionally, each of the second block data may have a corresponding first block data, which is not limited in this embodiment of the present application.

Optionally, the determining the real-time upload progress information of the file to be uploaded according to the content reading and file uploading operation is exemplified as follows: calculating a real-time upload speed based on the data size and time written to the target server, which is not limited in this embodiment of the present application.

Optionally, the file upload success related information may include, but is not limited to, one or more selected from the group consisting of information configured to reflect whether the file is uploaded successfully, information configured to reflect whether the entire file is uploaded successfully or partially uploaded successfully, information configured to reflect the specific successfully uploaded portion of the file, information configured to reflect the specific unsuccessfully uploaded portion of the file, and information configured to reflect the reason for unsuccessful upload, which is not limited in this embodiment of the present application.

Optionally, the file upload failure related information may include, but is not limited to, one or more selected from the group consisting of information configured to reflect whether the file upload failed, information configured to reflect whether the entire file upload failed or partially failed, information configured to reflect the specific portion of the file that failed to upload, information configured to reflect the specific portion of the file that did not fail to upload, and information configured to reflect the reason for the upload failure, which is not limited in this embodiment of the present application.

Optionally, this solution is configured to manage the status of upload success and failure using the Java layer. Compared to handling everything in C/C++ code, it provides a more flexible error handling mechanism. Supporting resumable upload and automatic retry at the JAVA layer improves the fault tolerance of the upload process, which is not limited in this embodiment of the present application.

It may be seen that this optional embodiment is configured to perform the data block reading operation and write to the data cache area based on the preset file size block unit, perform the content reading and file uploading operation on the block data based on the upload sequencing information, and determine the real-time upload progress information and the file upload completion status of the file to be uploaded according to the content reading and file uploading operation. This is beneficial for improving the comprehensiveness and reasonableness of the data reading and uploading method. Reading, writing, and uploading in blocks may effectively manage memory usage, avoid overflow, optimize memory usage, prevent loading a large file entirely into memory at once, reduce memory consumption, and is beneficial for improving the stability of file upload and application operation. It also improves the flexibility and orderliness of block files, contributing to enhancing the accuracy and efficiency of data reading and upload for the file to be uploaded.

In another optional embodiment, the method may further include the following operations:
calculating, during performing the content reading and file uploading operation, by the second information processing port, a first real-time upload speed according to determined data size information and time information of the file to be uploaded written to a target server;
determining, by the second information processing port according to determined upload requirement information, whether the first real-time upload speed satisfies a preset abnormal read-upload condition;
performing, by the second information processing port, a corresponding first buffer parameter and read parameter adjustment operation based on the data cache area in response to determining that the first real-time upload speed satisfies the preset abnormal read-upload condition.

Further optionally, the method may also include the following operation:
In response to determining that the first real-time upload speed does not satisfy the abnormal read upload condition, performing again the step of the second information processing port calculating the first real-time upload speed according to the determined data size information and time information for writing the file to be uploaded to the target server.

Optionally, the performing the corresponding first buffer parameter and read parameter adjustment operation based on the data cache area is exemplified as follows: appropriately reducing the buffer value size and the read size to reduce network load, which is not limited in this embodiment of the present application.

Optionally, the determining whether the first real-time upload speed satisfies the preset abnormal read-upload condition according to the determined upload requirement information is exemplified as follows: determining whether the upload speed decreases is not limited in this embodiment of the present application.

Further optionally, when using an app to upload a file, a real-time upload speed is calculated from the data size and time written to the target server, recording one speed per second; an average value is taken every 30 seconds, and this average value is used to control the size of the corresponding upload buffer value, which is not limited in this embodiment of the present application.

It may be seen that this optional embodiment is configured to, in response to determining that the first real-time upload speed satisfies the abnormal read upload condition, perform the corresponding first buffer parameter and read parameter adjustment operation. This is beneficial for improving the comprehensiveness, integrity, and reasonableness of an intelligent file uploading method, and further beneficial for improving the adjustment accuracy and reliability of the buffer parameters and read parameters for the file to be uploaded, as well as beneficial for improving the timeliness and efficiency of adjusting the buffer parameters and read parameters for the file to be uploaded, thereby contributing to alleviating network congestion, reducing network load, and improving the reading and uploading fluency of the file to be uploaded.

In yet another optional embodiment, after performing the corresponding first buffer parameter and read parameter adjustment operation based on the data cache area, the method may further include the following operations:
the second information processing port determines a second real-time upload speed corresponding to the file to be uploaded and the data cache area;
according to the upload requirement information, judging whether the second real-time upload speed satisfies a preset effective upload recovery condition;
in response to determining that the second real-time upload speed satisfies the effective upload recovery condition, performing a corresponding second buffer parameter and read parameter adjustment operation based on the data cache area.

Further optionally, the method may also include the following operation:
performing a corresponding third buffer parameter and read parameter adjustment operation based on the data cache area, and/or performing a corresponding additional exception handling operation, until a real-time upload speed satisfies the effective upload recovery condition, in response to determining that the second real-time upload speed does not satisfy the effective upload recovery condition.

Optionally, the performing the corresponding second buffer parameter and read parameter adjustment operation based on the data cache area is exemplified as follows: increasing the buffer value and the read data size to improve transmission efficiency, which is not limited in this embodiment of the present application.

Optionally, the determining whether the second real-time upload speed satisfies the preset effective upload recovery condition according to the upload requirement information is exemplified as follows: determining whether the upload speed recovers (increases), which is not limited in this embodiment of the present application.

It may be seen that this optional embodiment is configured to, in response to determining that the second real-time upload speed satisfies the effective upload recovery condition, perform the corresponding second buffer parameter and read parameter adjustment operation. This is beneficial for improving the comprehensiveness, integrity, and reasonableness of an intelligent file uploading method, and further beneficial for improving the adjustment accuracy and reliability of the buffer parameters and read parameters for the file to be uploaded, as well as beneficial for improving the timeliness and efficiency of adjusting the buffer parameters and read parameters for the file to be uploaded, thereby contributing to improving the upload and transmission efficiency of the file to be uploaded.

In yet another optional embodiment, the determining, by the second information processing port according to the determined upload requirement information, whether the first real-time upload speed satisfies the preset abnormal read-upload condition, may include:
determining, by the second information processing port, a first expected upload speed threshold according to the determined upload requirement information;
determining whether the first real-time upload speed is greater than or equal to the first expected upload speed threshold;
determining that the first real-time upload speed does not satisfy the preset abnormal read-upload condition in response to determining that the first real-time upload speed is greater than or equal to the first expected upload speed threshold;
determining that the first real-time upload speed satisfies the preset abnormal read-upload condition in response to determining that the first real-time upload speed is less than the first expected upload speed threshold.

Optionally, the upload requirement information may include, but is not limited to, one or more selected from the group consisting of upload scenario information, upload time requirement information, upload efficiency requirement information, upload effect requirement information, upload energy loss requirement information, upload network bandwidth configuration information, upload network delay condition information, upload server performance configuration information, upload method and tool information, concurrent upload quantity information, and other information that may be used to determine an expected upload speed, which is not limited in this embodiment of the present application.

It may be seen that this optional embodiment is configured to determine the satisfaction result of the abnormal read-upload condition by comparing the magnitude between the first real-time upload speed and the determined first expected upload speed threshold. This is beneficial for improving the comprehensiveness and reasonableness of the method for determining the satisfaction result of the abnormal read-upload condition, and further beneficial for improving the accuracy and reliability of the determined satisfaction result of the abnormal read-upload condition, thereby contributing to improving the timeliness, accuracy, and reliability of buffer and read parameter adjustment based on the satisfaction result of the abnormal read-upload condition.

In yet another optional embodiment, the determining, by the second information processing port according to the upload requirement information, whether the second real-time upload speed satisfies the preset effective upload recovery condition, may include:
determining, by the second information processing port, a second expected upload speed threshold according to the upload requirement information;
determining whether the second real-time upload speed is greater than or equal to a preset second expected upload speed threshold;
determining that the second real-time upload speed satisfies the preset effective upload recovery condition in response to determining that the second real-time upload speed is greater than or equal to the preset second expected upload speed threshold;
determining that the second real-time upload speed does not satisfy the preset effective upload recovery condition in response to determining that the second real-time upload speed is less than the preset second expected upload speed threshold.

It may be seen that this optional embodiment is configured to determine the satisfaction result of the effective upload recovery condition by comparing the magnitude between the second real-time upload speed and the determined second expected upload speed threshold. This is beneficial for improving the comprehensiveness and reasonableness of the method for determining the satisfaction result of the effective upload recovery condition, and further beneficial for improving the accuracy and reliability of the determined satisfaction result of the effective upload recovery condition, thereby contributing to improving the timeliness, accuracy, and reliability of buffer and read parameter adjustment based on the satisfaction result of the effective upload recovery condition.

### Embodiment 2

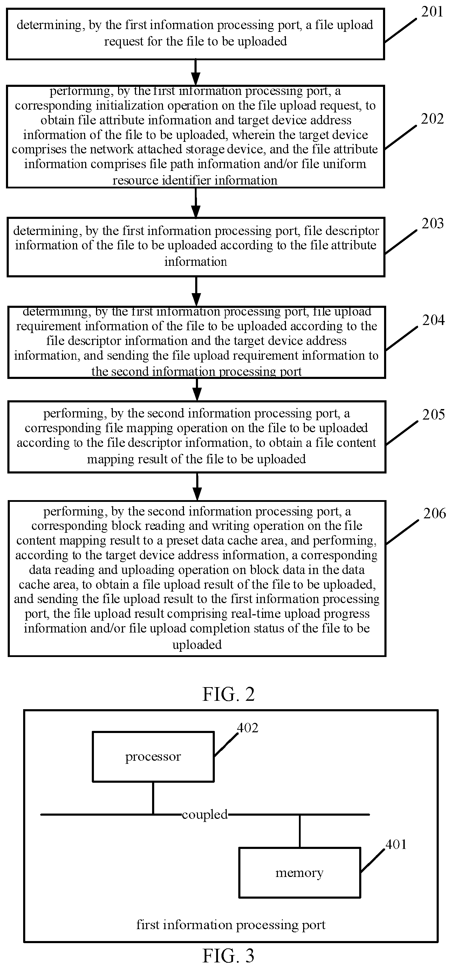

Please refer to FIG. 2. FIG. 2 is a schematic flowchart of another intelligent file uploading method disclosed in an embodiment of the present application. The method described in FIG. 2 may be applied in a file uploading device. The file uploading device is in communication connection with a network attached storage device, and the file uploading device includes a first information processing port and a second information processing port, which is not limited in this embodiment of the present application. As shown in FIG. 2, the intelligent file uploading method includes the following operations:
201. determining, by the first information processing port, a file upload request for the file to be uploaded.

Optionally, the file upload request may be sent by a user and transmitted to the first information processing port, which is not limited in this embodiment of the present application.

202. performing, by the first information processing port, a corresponding initialization operation on the file upload request, to obtain file attribute information and target device address information of the file to be uploaded, wherein the target device includes the network attached storage device, and the file attribute information includes file path information and/or file uniform resource identifier information.

Optionally, the file path information may correspond to PATH; the file uniform resource identifier information may correspond to URI, which is not limited in this embodiment of the present application.

203. determining, by the first information processing port, file descriptor information of the file to be uploaded according to the file attribute information.

Further optionally, the determining, by the first information processing port according to the file attribute information, the file descriptor information of the file to be uploaded, may include:
the first information processing port determining the file descriptor information of the file to be uploaded through the file path information and/or the file uniform resource identifier information.

204. determining, by the first information processing port, file upload requirement information of the file to be uploaded according to the file descriptor information and the target device address information, and sending the file upload requirement information to the second information processing port.

205. performing, by the second information processing port, a corresponding file mapping operation on the file to be uploaded according to the file descriptor information, to obtain a file content mapping result of the file to be uploaded.

206. performing, by the second information processing port, a corresponding block reading and writing operation on the file content mapping result to a preset data cache area, and performing, according to the target device address information, a corresponding data reading and uploading operation on block data in the data cache area, to obtain a file upload result of the file to be uploaded, and sending the file upload result to the first information processing port, the file upload result including real-time upload progress information and/or file upload completion status of the file to be uploaded.

In the embodiment of the present application, for other descriptions of steps 201 to 206, please refer to the detailed description of steps 101 to 103 in Embodiment 1, which will not be repeated herein in the embodiment of the present application.

It may be seen that the embodiment of the present application may implement intelligent file upload functionality through multiple steps, such as performing corresponding file upload requirement information determination operations, file mapping operations, data reading and uploading operations, and information interaction operations by the first information processing port and the second information processing port. This is beneficial for improving the comprehensiveness and integrity of an intelligent file uploading method, and is also beneficial for improving the reasonableness and feasibility of an intelligent file uploading method. Furthermore, performing corresponding block reading and writing operations on the file content mapping result, and performing corresponding data reading and uploading operations on the block data in the data cache area, reading, writing, and uploading in blocks, avoids loading a large file entirely into memory at once. This is beneficial for improving the efficiency, stability, and accuracy of file transfer and upload, thereby contributing to improving the accuracy and reliability of uploaded files, reducing memory consumption and occupancy, and providing flexibility and platform compatibility for file uploads. Additionally, it may also provide a specific method for determining file upload requirement information. Performing a corresponding initialization operation on the file upload request to obtain file attribute information and target device address information, and further determining file descriptor information according to the file attribute information, thereby obtaining the file upload requirement information, is beneficial for improving the comprehensiveness and reasonableness of the method for determining file upload requirement information. This further contributes to improving the accuracy and reliability of the determined file upload requirement information, thereby enhancing the accuracy and conformity of subsequent file uploads based on the file upload requirement information.

### Embodiment 3

Please refer to FIG. 3. FIG. 3 is a schematic structural diagram of a first information processing port disclosed in an embodiment of the present application. As shown in FIG. 3, the first information processing port may include:
a memory 401 storing executable code;
a processor 402 coupled to the memory 401;
wherein the processor 402 is configured to invoke the executable code stored in the memory 401 to execute the steps in the intelligent file uploading method described in Embodiment 1 or Embodiment 2.

### Embodiment 4

Please refer to FIG. 4. FIG. 4 is a schematic structural diagram of a second information processing port disclosed in an embodiment of the present application. As shown in FIG. 4, the second information processing port may include:
a memory 501 storing executable code;
a processor 502 coupled to the memory 501;
wherein the processor 502 is configured to invoke the executable code stored in the memory 501 to execute the steps in the intelligent file uploading method described in Embodiment 1 or Embodiment 2.

### Embodiment 5

Please refer to FIG. 5. FIG. 5 is a schematic structural diagram of yet another intelligent file uploading device disclosed in an embodiment of the present application. The file uploading device is in communication connection with a network attached storage device. The file uploading device includes a first information processing port and a second information processing port. As shown in FIG. 5, the file uploading device may include:
a memory 601 storing executable code;
a processor 602 coupled to the memory 601;
further, the file uploading device may also include an input interface 603 and an output interface 604 coupled to the processor 602;
wherein the processor 602 is configured to invoke the executable code stored in the memory 601 to execute the steps in the intelligent file uploading method described in Embodiment 1 or Embodiment 2.

## Claims

1. An intelligent file uploading method, wherein the method is applied in a file uploading device, the file uploading device is in communication connection with a network attached storage device, and the file uploading device comprises a first information processing port and a second information processing port, the method comprising:
determining, by the first information processing port, file upload requirement information of a file to be uploaded, and sending the file upload requirement information to the second information processing port, the file upload requirement information at least comprising file descriptor information of the file to be uploaded and target device address information, wherein the target device comprises the network attached storage device;
performing, by the second information processing port, a corresponding file mapping operation on the file to be uploaded according to the file descriptor information, to obtain a file content mapping result of the file to be uploaded;
performing, by the second information processing port, a corresponding block reading and writing operation on the file content mapping result to a preset data cache area, and performing, according to the target device address information, a corresponding data reading and uploading operation on block data in the data cache area, to obtain a file upload result of the file to be uploaded, and sending the file upload result to the first information processing port, the file upload result comprising real-time upload progress information and/or file upload completion status of the file to be uploaded.

2. The intelligent file uploading method according to claim 1, wherein the performing, by the second information processing port, a corresponding block reading and writing operation on the file content mapping result to a preset data cache area, and performing, according to the target device address information, a corresponding data reading and uploading operation on block data in the data cache area, to obtain a file upload result of the file to be uploaded, comprises:
performing, the second information processing port, a corresponding data block reading operation on the file content mapping result according to a preset file size block unit, to obtain at least one first block data, and writing each of the first block data to the preset data cache area, to obtain at least one second block data;
performing a corresponding content reading and file uploading operation on each of the second block data in the data cache area according to the target device address information and determined upload sequencing information corresponding to all the second block data;
determining, during performing the content reading and file uploading operation, real-time upload progress information of the file to be uploaded according to the content reading and file uploading operation;
determining, after the content reading and file uploading operation is completed, a file upload completion status of the file to be uploaded according to the content reading and file uploading operation, the file upload completion status being configured to represent file upload success related information and/or file upload failure related information.

3. The intelligent file uploading method according to claim 2, wherein the method further comprises:
calculating, during performing the content reading and file uploading operation, by the second information processing port, a first real-time upload speed according to determined data size information and time information of the file to be uploaded written to a target server;
determining, by the second information processing port according to determined upload requirement information, whether the first real-time upload speed satisfies a preset abnormal read-upload condition;
performing, by the second information processing port, a corresponding first buffer parameter and read parameter adjustment operation based on the data cache area in response to determining that the first real-time upload speed satisfies the preset abnormal read-upload condition.

4. The intelligent file uploading method according to claim 3, wherein the method, after performing the corresponding first buffer parameter and read parameter adjustment operation based on the data cache area, further comprises:
determining, by the second information processing port, a second real-time upload speed corresponding to the file to be uploaded and the data cache area;
determining, by the second information processing port according to the upload requirement information, whether the second real-time upload speed satisfies a preset effective upload recovery condition;
performing, by the second information processing port, a corresponding second buffer parameter and read parameter adjustment operation based on the data cache area in response to determining that the second real-time upload speed satisfies the preset effective upload recovery condition.

5. The intelligent file uploading method according to claim 3, wherein the determining, by the second information processing port according to determined upload requirement information, whether the first real-time upload speed satisfies the preset abnormal read-upload condition, comprises:
determining, by the second information processing port, a first expected upload speed threshold according to the determined upload requirement information;
determining whether the first real-time upload speed is greater than or equal to the first expected upload speed threshold;
determining that the first real-time upload speed does not satisfy the preset abnormal read-upload condition in response to determining that the first real-time upload speed is greater than or equal to the first expected upload speed threshold;
determining that the first real-time upload speed satisfies the preset abnormal read-upload condition in response to determining that the first real-time upload speed is less than the first expected upload speed threshold.

6. The intelligent file uploading method according to claim 4, wherein the determining, by the second information processing port according to the upload requirement information, whether the second real-time upload speed satisfies the preset effective upload recovery condition, comprises:
determining, by the second information processing port, a second expected upload speed threshold according to the upload requirement information;
determining whether the second real-time upload speed is greater than or equal to a preset second expected upload speed threshold;
determining that the second real-time upload speed satisfies the preset effective upload recovery condition in response to determining that the second real-time upload speed is greater than or equal to the preset second expected upload speed threshold;
determining that the second real-time upload speed does not satisfy the preset effective upload recovery condition in response to determining that the second real-time upload speed is less than the preset second expected upload speed threshold.

7. The intelligent file uploading method according to claim 1, wherein the determining, by the first information processing port, file upload requirement information of the file to be uploaded, comprises:
determining, by the first information processing port, a file upload request for the file to be uploaded;
performing a corresponding initialization operation on the file upload request, to obtain file attribute information and target device address information of the file to be uploaded, the file attribute information comprising file path information and/or file uniform resource identifier information;
determining file descriptor information of the file to be uploaded according to the file attribute information;
determining the file upload requirement information of the file to be uploaded according to the file descriptor information and the target device address information.

8. The intelligent file uploading method according to claim 3, wherein the method further comprises:
again executing the step of calculating the first real-time upload speed according to the determined data size information and the time information of the file to be uploaded written to the target server in response to determining that the first real-time upload speed does not satisfy the abnormal read-upload condition.

9. The intelligent file uploading method according to claim 4, wherein the method further comprises:
performing a corresponding third buffer parameter and read parameter adjustment operation based on the data cache area, and/or performing a corresponding additional exception handling operation, until a real-time upload speed satisfies the effective upload recovery condition, in response to determining that the second real-time upload speed does not satisfy the effective upload recovery condition.

10. An intelligent file uploading device, wherein the file uploading device is in communication connection with the network attached storage device, the file uploading device comprises a first information processing port and a second information processing port, and the first information processing port and the second information processing port each comprise:
a memory, memorized with an executable code; and
a processor, coupled with the memory,
wherein the processor is configured to invoke the executable code stored in the memory to execute the intelligent file uploading method according to any one of claims 1 to 9.
